# EUROPÄISCHE PATENTSCHRIFT

(11) **EP 0 839 845 B1**
(45) Veröffentlichungstag und Bekanntmachung des Hinweises auf die Patenterteilung: **10.05.2000**
(21) Anmeldenummer: 97115602.1
(22) Anmeldetag: 09.09.1997
(51) Int. Cl.: C08G 18/10, C08G 18/32, C08G 18/80, C09D 175/04, C09D 5/03

(54) **Blockierte Polyisocyanate mit eingebautem HALS-Stabilisator**
Blocked polyisocyanates with built-in HALS-stabilizer
Polyisocyanates bloqués avec HALS-stabilisateur incorporé

(30) Priorität: 02.11.1996 DE 19645166
(43) Veröffentlichungstag der Anmeldung: 06.05.1998
(73) Patentinhaber: Degussa-Hüls Aktiengesellschaft, 60287 Frankfurt am Main (DE)
(72) Erfinder: Gras, Rainer, Dr., 44879 Bochum (DE); Wolf, Elmar, Dr., 45661 Recklinghausen (DE)

(56) Entgegenhaltungen:
- EP-A- 0 047 967
- DE-A- 4 010 444
- US-A- 4 102 870
- US-A- 4 145 512
- US-A- 5 504 178

## Beschreibung

Die vorliegende Erfindung betrifft blockierte Polyisocyanate mit einem eingebauten HALS-Stabilisator, ein Verfahren zu ihrer Herstellung sowie deren Verwendung zur Herstellung von PUR-Pulverlacken.

Aus der US-Patenschrift 5 504 178 sind blockierte Polyisocyanate mit eingebautem HALS-Stabilisator, welcher über eine R₂N-NR-CO-Gruppe verfügen muß, bekannt.

Blockierte Polyisocyanate werden zur Herstellung von lagerstabilen, in der Hitze härtbaren lK-PUR-Einbrennsystemen verwendet. Das Maskieren oder Blockieren von Polyisocyanaten ist eine seit langem bekannte Arbeitsweise für den zeitweisen Schutz von Isocyanatgruppen. Das am meisten eingesetzte Mittel zum Blockieren ist ε-Caprolactam, das mit Isocyanaten eine stabile Verbindung bis ungefähr 130 - 140 °C bildet, und das die blockierten NCO-Gruppen bei Einbrenntemperaturen von 180 °C und höher in Freiheit setzt.

Die für hitzehärtbare, pulverförmige Massen bevorzugten Isocyanate sind (cyclo)aliphatische Diisocyanate, und zwar wegen ihres ausgezeichneten Alterungsverhaltens im Vergleich zu aromatischen Isocyanaten, welche insbesondere den Nachteil des Vergilbens beim Einbrennen und Altern aufweisen.

Es haben sich als PUR-Pulverhärter vor allem ε-Caprolactam blockierte Isocyanat-Polyol-Addukte auf Isophorondiisocyanat(IPDI)-Basis durchgesetzt. Der Grund hierfür liegt mit großer Wahrscheinlichkeit in der unterschiedlichen Reaktivität der beiden NCO-Gruppen im IPDI, die eine gezielte Adduktbildung aus IPDI und dem Polyol (NCO:OH = 2:1) ermöglichen (enge Molgewichtsverteilung). Eine enge Molgewichtsverteilung des Härters ist die Voraussetzung für einen guten Verlauf des ausgehärteten Pulvers.

ε-Caprolactam blockiertes IPDI schmilzt bei 53 - 55 °C. Infolge der niedrigen Schmelztemperatur backen die aus diesem blockierten IPDI hergestellten Pulver beim Lagern zusammen. Zur Erhöhung des Schmelzpunktes wird IPDI vor der ε-Caprolactam-Blockierung einer Kettenverlängerung mit einem Polyol (NCO:OH = 2:1) unterworfen. In der DE-OS 21 05 777 werden als Kettenverlängerungsmittel für IPDI Polyole wie Trimethylolpropan, Trimethylhexandiol-1.6, Diethylenglykol, in der DE-OS 25 42 191 Gemische aus di- und trifunktionellen Polyolen genannt.

Die mit diesen Härtern hergestellten PUR-Pulverlacke müssen gegen Abbau durch Sonneneinstrahlung stabilisiert werden. Als Stabilisatoren werden die bekannten UV-Stabilisatoren auf Benztriazol-Basis (z. B. TINUVIN® 326) bzw. auf Basis von stark sterisch gehinderten Aminen (z. B. TINUVIN® 770) eingesetzt. Nachteilig bei den mit diesen Stabilisatoren stabilisierten PUR-Pulverbeschichtungen ist deren nur begrenzte Lebensdauer, da sie mit der Zeit an die Oberfläche "auswandern" und da "vernichtet" werden.

Aufgabe der vorliegenden Erfindung war es deshalb, partiell oder total blockierte Polyisocyanate zur Verfügung zu stellen, mit denen man ohne Zusatz eines UV-Stabilisators permanent stabilisierte PUR-Pulverbeschichtungen herstellen kann.

Gegenstand der vorliegenden Erfindung sind somit partiell oder vollständig blockierte Polyisocyanate mit einem eingebauten HALS-Stabilisator, enthaltend Blockierungsmittel und Addukte aus Diisocyanaten und Polyolen der allgemeinen Formel: 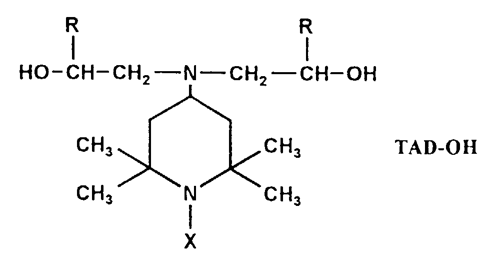 mit R gleich H, Alkyl, Cycloalkyl mit 1 - 20 C-Atomen und
X gleich H, 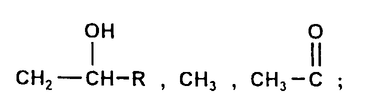 wobei die Addukte pro OH-Äquivalent 2 - 20 NCO-Äquivalente enthalten.

Als Diisocyanate im Sinne dieser Anmeldung sind insbesondere Diisocyanate aliphatischer, cycloaliphatischer und (cyclo)aliphatischer Struktur anzusehen. Statt einzelne Vertreter hier aufzuführen, wird auf die Literatur verwiesen: Houben-Weyl, Methoden der organischen Chemie, Band 14/2, S. 61 ff. und J. Liebigs Annalen der Chemie, Band 562, S. 75 - 136. Bevorzugt werden in der Regel die technisch leicht zugänglichen aliphatischen, cycloaliphatischen und (cylco)aliphatischen Diisocyanate mit 6 - 14 C-Atomen, insbesondere Hexamethylendiisocyanat (HDI), 3-Isocyanatomethyl-3.5.5-trimethylcyclohexylisocyanat (IPDI) und Dicyclohexylmethan-4.4'-diisocyanat (HMDI).

Als Blockierungsmittel im Sinne dieser Anmeldung sind insbesondere die in der PUR-Chemie üblichen Verbindungen wie Oxime, z. B Acetonoxim, Methylethyl-, Methylisobutyl-, Diisobutylketoxim sowie Acetophenonoxim, Lactame, z. B. ε-Caprolactam, sekundäre Monoamine, z. B. Diisobutylamin, Dicyclohexylamin, Triazole, z. B. 1.2.4-Triazol sowie irreversibele Blockierungsmittel wie Alkohole, z. B. Methanol, Ethanol, iso-Propanol, 2-Ethylhexanol, die im Gemisch mit den oben genannten reversibelen Blockierungsmitteln verwendet werden können. Bevorzugt werden ε-Caprolactam, Methylethylketoxim und/oder 1.2.4-Triazol eingesetzt.

Weiterer Gegenstand der Erfindung ist ein Verfahren zur Herstellung partiell oder vollständig blockierter Polyisocyanate mit einem eingebauten HALS-Stabilisator, welches dadurch gekennzeichnet ist, daß das Blockierungsmittel mit Diisocyanat-Addukten umgesetzt wird, wobei die Addukte pro OH-Äquivalent 2 - 8 NCO-Äquivalente enthalten.

Die Herstellung der erfindungsgemäßen blockierten Polyisocyanate erfolgt in zwei Stufen, wobei in der ersten Stufe das Diisocyanat mit dem TAD-OH umgesetzt wird. Hierbei wird zu dem bei 80 - 120 °C vorgelegten Diisocyanat das TAD-OH unter intensiver Rührung innerhalb von 2 - 3 h unter Stickstoff und Ausschluß von Feuchtigkeit so zudosiert, daß pro OH-Äquivalent des TAD-OH mindestens 2, maximal 20, vorzugsweise 4 - 10 Äquivalente NCO des Diisocyanats zur Reaktion kommen. In der zweiten Stufe werden dann die NCO-Gruppen partiell oder total blockiert: Zu dem Diisocyanat-TAD-OH-Addukt wird bei ca. 100 - 140 °C das Blockierungsmittel- oder Blockierungsmittelgemisch portionsweise so zugegeben, daß die Temperatur nicht über 150 °C ansteigt. Nach Beendigung der Blockierungsmittel oder Blockierungsmittelgemisch-Zugabe wird die Reaktionsmischung zur Vervollständigung der Umsetzung noch etwa 2 h bei 120 - 140 °C erhitzt. Um die Reaktion zu beschleunigen, kann man einen konventionellen Urethanisierungskatalysator hinzugeben, z. B. Organozinnverbindungen oder Triethylendiamin (Dabco), und zwar in einer Menge von 0,01 bis 0,1 Gew.-% als Katalysator, bezogen auf das Gesamtgemisch.

Als besonders vorteilhaft hat sich das folgende Verfahren zur Herstellung der erfindungsgemäßen Verbindungen erwiesen: In der ersten Stufe werden die Diisocyanate mit Blockierungsmittel oder Blockierungsmittelgemisch bei 80 - 150 °C umgesetzt, und in der zweiten Stufe erfolgt die Umsetzung der restlichen NCO-Gruppen mit den Polyolen.

Als TAD-OH eignen sich z. B. 4-Bis(2-hydroxyethyl)-amino-2.2.6.6-tetra-methylpiperidin, 4-Bis(2-hydroxypropyl)-amino-2.2.6.6-tetramethylpiperidin, 4-Bis(2-hydroxybutyl)-amino-2.2.6.6-tetramethylpiperidin, 4-Bis(2-hydroxyethyl)-amino-1(2-hydroxyethyl)-2.2.6.6-tetramethylpiperidin ("TAD-Triol"). Im Prinzip kommen für das erfindungsgemäße Verfahren alle Diole bzw. Triole in Frage, die nach folgender Reaktionsgleichung in bekannter Weise hergestellt werden: 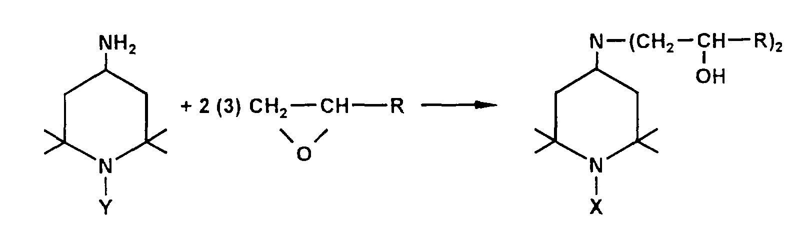
R: H, Alkyl, Cycloalkyl mit 1 - 20 C-Atomen;

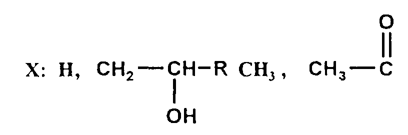

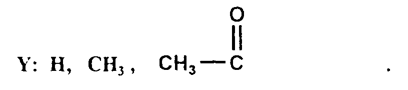

Die folgenden Polyole werden ganz bevorzugt verwendet:

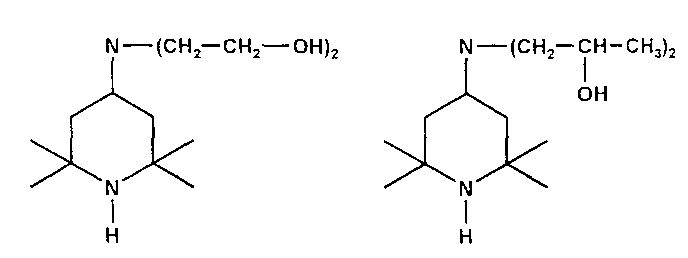

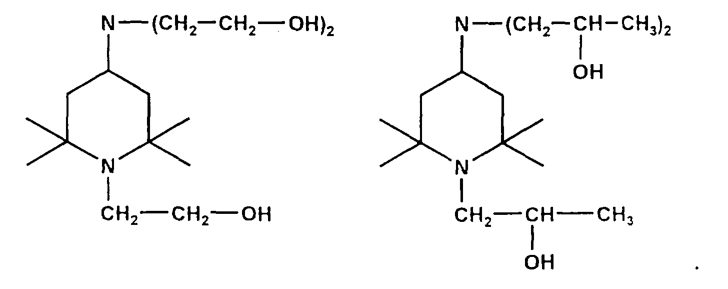

Die Herstellung von TAD-OH erfolgt in einer 1-Stufenreaktion aus den Komponenten (TAD + Monoepoxid) bei 100 - 130 °C. Das 4-Amino-2.2.6.6-tetramethylpiperidin (TAD) wird nach dem in der DE-OS 28 07 172 beschriebenen Verfahren durch aminierende Hydrierung des aus Aceton und NH₃ hergestellten Triacetonamins hergestellt.

Bei den erfindungsgemäßen Verbindungen handelt es sich im allgemeinen um Verbindungen des Molekulargewichtsbereiches 500 - 1000, vorzugsweise 600 - 800. Die Verfahrensprodukte besitzen Schmelzpunkte (Erweichungstemperatur) von 65 - 140 °C, vorzugsweise 70 - 120 °C und eine Glasübergangstemperatur von 25 - 100 °C, vorzugsweise von 35 - 85 °C. Die bevorzugten erfindungsgemäßen Verbindungen sind darüber hinaus durch einen Gehalt an der stark sterisch gehinderten Aminogruppe (berechnet als NH) von 0,1 - 2 Gew.-%, vorzugsweise 0,8 - 1,4 Gew.-%, einen Gehalt an freien NCO-Gruppen von maximal 5 Gew.-% und einen Gehalt an endständig in blockierter Form vorliegenden Isocyanatgruppen (berechnet als NCO) von 2 - 18 Gew.-%, vorzugsweise 8 - 16 Gew.-%, charakterisiert.

Die Verfahrensprodukte eignen sich als Härter für Zerewitinoff-aktive Wasserstoffatome aufweisende höherfünktionelle thermoplastische Verbindungen. In Kombination mit derartigen (H-aktiven) Verbindungen führen die Verfahrensprodukte oberhalb 160 °C, vorzugsweise bei 180 - 200 °C, zu hochwertigen Kunststoffen aushärtbaren Systemen.

Das bedeutendste Anwendungsgebiet für derartige Systeme ist ihre Verwendung als permanent stabilisierte Bindemittel für (PUR)-Lacksysteme, insbesondere von PUR-Einkomponenten-Einbrennlacken und PUR-Pulverlacken.

Gegenstand der vorliegenden Erfindung sind demnach auch lagerstabile, in der Hitze härtbare PUR-Pulverlacke auf Basis der erfindungsgemäßen blockierten Diisocyanat-Addukte und OH-Gruppen aufweisende Polymere der folgenden Zusammensetzung:
a) 100 Gew.-T. OH-gruppenhaltiges Polymer
b) 10 - 90 Gew.-T. erfindungsgemäßes blockiertes Polyisocyanat
c) 0 - 160 Gew.-T. Pigmente
d) 0 - 200 Gew.-T. übliche Füllstoffe
e) 0 - 5 Gew.-T. Katalysator
f) 0,5 - 5 Gew.-T. Verlaufsmittel
mit einem OH/NCO-Verhältnis von 1 : 0,5 bis 1,2, vorzugsweise 1 : 0,8 bis 1,1 und insbesondere 1 : 1.

Der Bestandteil a) kann im Prinzip jedes mehr als zwei OH-Gruppen enthaltende Polymer sein, das mindestens bei 70 °C schmilzt. Hierbei handelt es sich um Polyetherpolyole, Polyesteramidpolyole, Polyurethanpolyole, hydroxylierte Acrylharze usw., deren OH-Gruppen für die Vernetzung mit den erfindungsgemäßen blockierten Diisocyanaten bestimmt sind. Besonders bevorzugt sind unter den zahlreichen Möglichkeiten für Hydroxylgruppen tragende Polymere im Rahmen der Erfindung Polyesterpolyole. Solche Polyesterpolyole müssen ein Molekulargewicht zwischen 1000 - 3000, vorzugsweise zwischen 1500 - 2500, und eine OH-Zahl von 20 - 200, vorzugsweise 30 - 150 mg KOH/g, eine Viskosität < 60.000, vorzugsweise < 40.000 Pa·s bei 160 °C, und einen Schmelzpunkt > 70 und < 120 °C, vorzugsweise von 75 - 100 °C haben. Solche Polyesterpolyole werden z. B. in den DE-OSS 19 57 483, 25 42 191, 30 04 876 und 31 43 060 beschrieben.

Um die Geliergeschwindigkeit der hitzehärtbaren Pulverlacke zu erhöhen, kann man Katalysatoren zusetzen. Als Katalysatoren verwendet man Organozinnverbindungen wie Dibutylzinndilaurat (DBTL), Sn(II)-octoat, Dibutylzinnmaleat usw. Die Menge an zugesetztem Katalysator beträgt 0,03 - 0,5 Gew.-%, vorzugsweise 0,05 - 0,15 Gew.-%, unter Einbeziehung der bereits enthaltenen Katalysatormenge aus den blockierten Polyisocyanaten.

Die Isocyanatkomponente wird für die Herstellung von PUR-Pulverlacken mit dem geeigneten hydroxylgruppenhaltigen Polymeren und gegebenenfalls Katalysatoren sowie Pigmenten und üblichen Hilfsmitteln wie Füllstoffen und Verlaufsmitteln, z. B. Siliconöl, Acrylatharzen, gemischt und in der Schmelze homogenisiert. Dies kann in geeigneten Aggregaten, wie z. B. beheizbaren Knetern, vorzugsweise jedoch durch Extrudieren, erfolgen, wobei Temperaturobergrenzen von 130 - 140 °C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers geeignete Sustrate kann nach den bekannten Verfahren, wie z. B. durch elektrostatisches Pulversprühen, Wirbelsintern, elektrostatisches Wirbelsintern, erfolgen. Nach dem Pulverauftrag werden die beschichteten Werkstücke zur Aushärtung 60 bis 4 Minuten auf eine Temperatur von 150 - 220 °C, vorzugsweise 30 bis 6 Minuten bei 160 - 200 °C, erhitzt.

Die erfindungsgemäßen PUR-Pulverlacke zeichnen sich durch hervorragende Witterungs- und sehr gute Farbbeständigkeit aus.

### Experimenteller Teil

### A) 1. Herstellung von 4-Bis(2-hydroxyethyl)-amino-2.2.6.6-tetramethylpiperidin (TAD-2 EO)

780 Gew.-T. 4-Amio-2.2.6.6-tetramethylpiperidin (TAD) wurden in einem 2-1-Stahlautoklaven unter Stickstoffatmosphäre bei 100 - 120 °C langsam mit 484 Gew.-T. Ethylenoxid (EO) versetzt. Der Druck stieg dabei maximal auf 7 bar. Nach beendeter Reaktion wurde entspannt und fraktioniert destilliert.

Man erhielt 203 Gew.-T. 4-(2-Hydroxyethyl)-amino-2.2.6.6-tetramethylpiperidin mit einem Siedepunkt von 120 - 145 °C/0,27 mbar und als Hauptfraktion 798 Gew.-T. 4-Bis(2-hydroxyethyl)-amino-2.2.6.6-tetramethylpiperidin mit einem Siedepunkt von 170 - 173°C/0,20 mbar.

### A) 2. Herstellung von 4-Bis(2-hydroxypropyl)-amino-2.2.6.6-tetramethylpiperidin (TAD-2 PO)

In Analogie zur Herstellung von TAD-2 EO wurde TAD-2 PO hergestellt, wobei anstelle von Ethylenoxid Propylenoxid eingesetzt wurde. Das danach erhaltene TAD-2 PO hatte einen Schmelzpunkt von 97 - 102 °C und eine Basenzahl von 410 mg KOH/g.

### A) 3. Herstellung von 4-Bis(2-hydroxyethyl)-amino-1-hydroxyethyl-2.2.6.6-tetramethylpiperidin (TAD-3 EO)

780 Gew.-T TAD und 700 Gew.-T. Ethylenoxid wurden in Analogie zum Beispiel 1 hergestellt. Das danach erhaltene TAD-3 EO hatte eine Basenzahl von 385 mg KOH/g

### B) Herstellung der blockierten Addukte

### Beispiel 1

Zu 444 Gew.-T. IPDI wurden bei 80 °C portionsweise 244 Gew.-T. 4-Bis(hydroxyethyl)-amino-2.2.6.6-tetramethylpiperidin (TAD-2 EO) zugegeben und so lange weitererhitzt, bis der NCO-Gehalt 12,2 % erreicht hatte. Dann wurden dem Reaktionsgemisch bei 120 °C 226 Gew.-T. ε-Caprolactam so zugegeben, daß die Temperatur nicht über 130 °C stieg. Nach Beendigung der ε-Caprolactam-Zugabe wurde das Reaktionsgemisch zur Vervollständigung der Reaktion noch 2 h bei 120 ° C weitererhitzt.

| | |
|---|---|
| Gehalt an freiem NCO | 0,4 % |
| Gesamt-NCO-Gehalt | 9,0 % |
| Amingehalt | 2,18 mmol NH₂/g |
| Schmelzpunkt | 92 - 98 °C |

### Beispiel 2

Die Zusammensetzung des Beispiels 2 ist identisch mit der des Beispiels 1. Es unterscheidet sich vom Beispiel 1 lediglich durch die Reihenfolge, in der die Reaktionskomponenten miteinander zur Reaktion gebracht wurden.

Zu 444 Gew.-T. IPDI wurden bei 100 ° C 226 Gew.-T. ε-Caprolactam so zugegeben, daß die Temperatur nicht über 110 °C stieg. Nachdem ein NCO-Gehalt von 12,5 % erreicht war, wurden bei 120 °C portionsweise 244 Gew.-T. TAD-2 EO so zugegeben, daß die Temperatur nicht über 130 °C stieg. Zur Vervollständigung der Reaktion wurde nach der TAD-2 EO-Zugabe noch 2 h bei 120 °C weitererhitzt.

| | |
|---|---|
| Gehalt an freiem NCO | 0,5 % |
| Gesamt-NCO-Gehalt | 9,1 % |
| Amingehalt | 2,18 mmol NH₂/g |
| Schmelzpunkt | 93 - 97 °C |

### Beispiel 3

In Analogie zum Beispiel 1 wurden 666 Gew.-T. IPDI mit 244 Gew.-T. TAD-2 EO umgesetzt und in einem 2. Reaktionsschritt entsprechend Beispiel 1 mit 452 Gew.-T. ε-Caprolactam blockiert.

| | |
|---|---|
| Gehalt an freiem NCO | 0,7 % |
| Gesamt-NCO-Gehalt | 12,3 % |
| Amingehalt | 1,46 mmol NH₂/g |
| Schmelzpunkt | 85 - 90 °C |

### Beispiel 4

In Analogie zum Beispiel 1 wurden 888 Gew.-T. IPDI mit 244 Gew.-T. TAD-2 EO umgesetzt und in einem 2. Reaktionsschritt mit 678 Gew.-T. ε-Caprolactam blockiert (Reaktionsbedingungen wie im Beispiel 1).

| | |
|---|---|
| Gehalt an freiem NCO | 0,6 % |
| Gesamt-NCO-Gehalt | 13,9 % |
| Amingehalt | 1,1 mmol NH₂/g |
| Schmelzpunkt | 72 - 77 °C |

### Beispiel 5

Zu 1110 Gew.-T. IPDI wurden bei 80 °C portionsweise 272 Gew.-T. 4-(Bis-β-hydroxypropyl)-amino-2.2.6.6-tetramethylpiperidin zugegeben und so lange bei 80 ° C weitererhitzt, bis der NCO-Gehalt von 24,5 % erreicht war. Danach wurden bei 100 °C 904 Gew.-T. ε-Caprolactam so zugegeben, daß die Temperatur nicht über 110 °C anstieg. Nach Beendigung der ε-Caprolactam-Zugabe wurde das Reaktionsgemisch noch 2 h bei 110 °C weitererhitzt.

| | |
|---|---|
| Gehalt an freiem NCO | 0,6 % |
| Gesamt-NCO-Gehalt | 14,7 % |
| Amingehalt | 0,87 mmol NH₂/g |
| Schmelzpunkt | 67 - 73 ° C |

### Beispiel 6

In Analogie zum Beispiel 1 wurden 888 Gew.-T. IPDI mit 288 Gew.-T. TAD-3 EO umgesetzt und anschließend mit 565 Gew.-T. ε-Caprolactam blockiert.

| | |
|---|---|
| Gehalt an freiem NCO | 0,4 % |
| Gesamt-NCO-Gehalt | 11,91% |
| Amingehalt | 1,12 mmol NH₂/g |
| Schmelzpunkt | 95 - 97 °C |

### Beispiel 7

In Analogie zum Beispiel 1 wurden 1110 Gew.-T. IPDI mit 288 Gew.-T. TAD-3 EO umgesetzt und anschließend mit 791 Gew.-T. ε-Caprolactam blockiert.

| | |
|---|---|
| Gehalt an freiem NCO | 0,3 % |
| Gesamt-NCO-Gehalt | 13,1 % |
| Amingehalt | 0,9 mmol NH₂/g |
| Schmelzpunkt | 85 - 87 ° C |

### Beispiel 8

In Analogie zum Beispiel 1 wurden 777 Gew.-T. IPDI und 144 Gew.-T. TAD-3 EO umgesetzt und anschließend mit 621 Gew.-T. ε-Caprolactam blockiert.

| | |
|---|---|
| Gehalt an freiem NCO | 0,4 % |
| Gesamt-NCO-Gehalt | 14,66 % |
| Amingehalt | 0,8 mmol NH₂/g |
| Schmelzpunkt | 80 - 82 °C |

### Beispiel 9

In Analogie zum Beispiel 1 wurden 666 Gew.-T. IPDI mit 244 Gew.-T. TAD-2 EO umgesetzt und im 2. Reaktionsschritt entsprechend Beispiel 1 mit 395,5 Gew.-T. ε-Caprolactam blockiert.

| | |
|---|---|
| Gehalt an freiem NCO | 1,4 % |
| Gesamt-NCO-Gehalt | 12,5 % |
| Amingehalt | 1,51 mmol NH₂/g |
| Schmelzpunkt | 79 - 84 °C |

### Beispiel 10

In Analogie zum Beispiel 1 wurden 1 110 Gew.-T. IPDI mit 288 Gew.-T. TAD-3 EO umgesetzt und anschließend mit 734,5 Gew.-T. ε-Caprolactam umgesetzt.

| | |
|---|---|
| Gehalt an freiem NCO | 0,8 % |
| Gesamt-NCO-Gehalt | 13,5 % |
| Amingehalt | 0,94 mmol NH₂/g |
| Schmelzpunkt | 80 - 82 °C |

### Beispiel 11

In Analogie zum Beispiel 1 wurden 524 Gew.-T. HMDI mit 244 Gew.-T. TAD-2 EO umgesetzt und anschließend im 2. Reaktionsschritt mit 226 Gew.-T. ε-Caprolactam umgesetzt.

| | |
|---|---|
| Gehalt an freiem NCO | 0,1 % |
| Gesamt-NCO-Gehalt | 8,3 % |
| Amingehalt | 2,01 mmol NH₂/g |
| Schmelzpunkt | 87 - 89 °C |

### Beispiel 12

In Analogie zum Beispiel 1 wurden 1 048 Gew.-T. HMDI mit 288 Gew.-T. TAD-3 EO umgesetzt und im 2. Reaktionsschritt mit 565 Gew.-T. ε-Caprolactam umgesetzt.

| | |
|---|---|
| Gehalt an freiem NCO | 0,2 % |
| Gesamt-NCO-Gehalt | 10,9 % |
| Amingehalt | 1,05 mmol NH₂/g |
| Schmelzpunkt | 91 - 93 °C |

### Beispiel 13

In Analogie zum Beispiel 1 wurden 504 Gew.-T. HDI mit 288 Gew.-T. TAD-3 EO umgesetzt und im 2. Reaktionsschritt mit 339 Gew.-T. ε-Caprolactam umgesetzt.

| | |
|---|---|
| Gehalt an freiem NCO | 0,1 % |
| Gesamt-NCO-Gehalt | 11,0 % |
| Amingehalt | 1,77 mmol NH₂/g |
| Schmelzpunkt | 56 - 58 °C |

### Beispiel 14

In Analogie zum Beispiel 1 wurden 666 Gew.-T. IPDI mit 244 Gew.-T. TAD-2 EO umgesetzt und im 2. Reaktionsschritt mit 348 Gew.-T. Methylethylketoxim umgesetzt.

| | |
|---|---|
| Gehalt an freiem NCO | 0,1 % |
| Gesamt-NCO-Gehalt | 13,2 % |
| Amingehalt | 1,58 mmol NH₂/g |
| Schmelzpunkt | 67 - 70 ° C |

### Beispiel 15

In Analogie zum Beispiel 1 wurden 666 Gew.-T. IPDI mit 288 Gew.-T. TAD-3 EO umgesetzt und im 2. Reaktionsschritt mit 207 Gew.-T. 1.2.4-Triazol umgesetzt.

| | |
|---|---|
| Gehalt an freiem NCO | 0,1 % |
| Gesamt-NCO-Gehalt | 10,7 % |
| Amingehalt | 1,70 mmol NH₂/g |
| Schmelzpunkt | 135 - 137 °C |

### Beispiel 16

In Analogie zum Beispiel 1 wurden 786 Gew.-T. HMDI mit 244 Gew.-T. TAD-2 EO umgesetzt und im 2. Reaktionsschritt mit 276 Gew.-T. 1.2.4-Triazol umgesetzt.

| | |
|---|---|
| Gehalt an freiem NCO | 0,2 % |
| Gesamt-NCO-Gehalt | 12,6 % |
| Amingehalt | 1,51 mmol NH₂/g |
| Schmelzpunkt | 93 - 95 °C |

### Beispiel 17

In Analogie zum Beispiel 1 wurden 504 Gew.-T. HDI mit 288 Gew.-T. TAD-3 EO umgesetzt und im 2. Reaktionsschritt mit 207 Gew.-T. 1.2.4-Triazol umgesetzt.

| | |
|---|---|
| Gehalt an freiem NCO | 0,1 % |
| Gesamt-NCO-Gehalt | 12,5 % |
| Amingehalt | 2,00 mmol NH₂/g |
| Schmelzpunkt | 76 - 78 ° C |

### C) Polyolkomponente

### Allgemeine Herstellungsvorschrift

Die Ausgangskomponenten - Terephthalsäure (TS), Dimethylterephthalat (DMT), Hexandiol-1.6 (HD), Neopentylglykol (NPG), 1.4-Dimethylolcyclohexan (DMC) und Trimethylolpropan (TMP) - werden in einen Reaktor gegeben und mit Hilfe eines Ölbades erwärmt. Nachdem die Stoffe zum größten Teil aufgeschmolzen sind, werden bei einer Temperatur von 160 °C 0,5 Gew.-% Di-n-butylzinnoxid als Katalysator zugesetzt. Die erste Methanolabspaltung tritt bei einer Temperatur von ca. 170 °C auf. Innerhalb 6 bis 8 Stunden wird die Temperatur auf 220 bis 230 °C erhöht und innerhalb weiterer 12 bis 15 Stunden die Reaktion zu Ende geführt. Der Polyester wird auf 200 °C abgekühlt und durch Anlegen von Vakuum (1,33 mbar) innerhalb 30 bis 45 Minuten weitgehend von flüchtigen Anteilen befreit. Während der gesamten Reaktionszeit wird das Sumpfprodukt gerührt und ein schwacher N₂-Strom durch das Reaktionsgemisch geleitet.

Tabelle 1 gibt Polyesterzusammensetzungen und Polyester des Marktes mit den entsprechenden physikalischen und chemischen Kenndaten wieder.

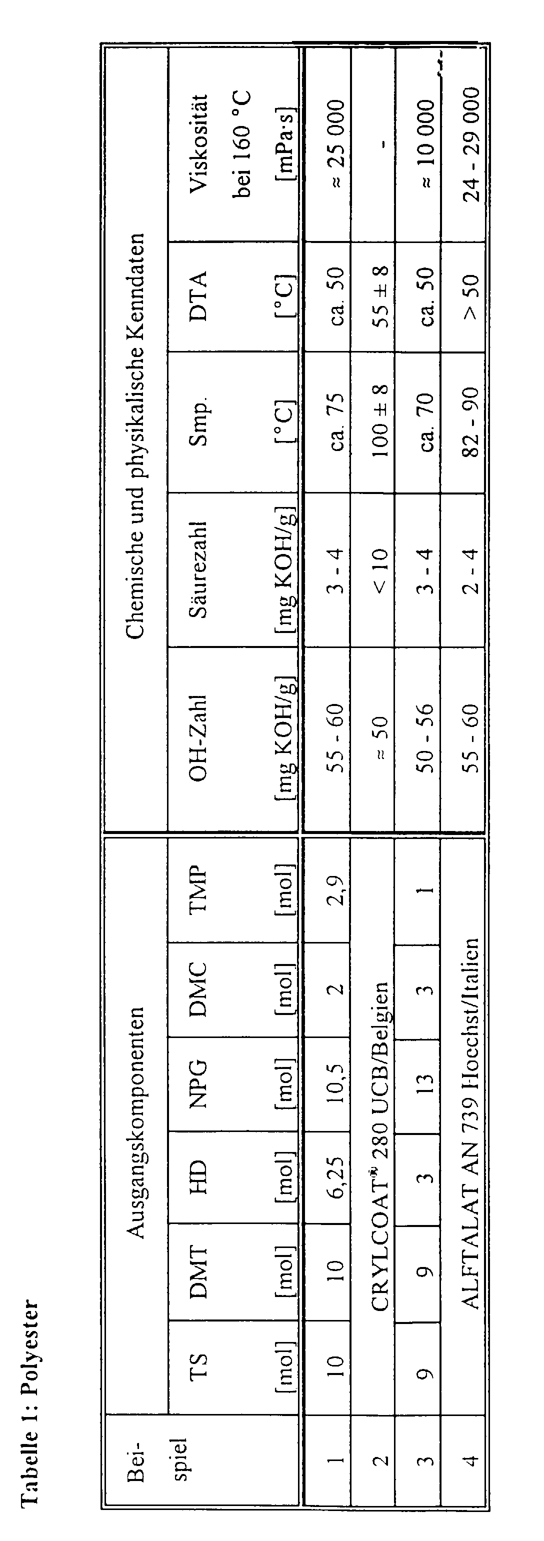

### D Polyurethan-Pulverlacke

### Allgemeine Herstellungsvorschrift

Die zerkleinerten Produkte - blockierte Polyisocyanate (Vernetzer), Polyester, Verlaufsmittel-, ggf. Katalysator-Masterbatch - werden ggf. mit dem Weißpigment in einem Kollergang innig vermischt und anschließend im Extruder bis maximal 130 °C homogenisiert. Nach dem Erkalten wird das Extrudat gebrochen und mit einer Stiftsmühle auf eine Korngröße < 100 µm gemahlen. Das so hergestellte Pulver wird mit einer elektrostatischen Pulverspritzanlage bei 60 KV auf entfettete, ggf. vorbehandelte Eisenbleche appliziert und in einem Umlufttrockenschrank bei Temperaturen zwischen 180 und 200 °C eingebrannt.

### Verlaufsmittel-Masterbatch

Es werden 10 Gew.-% des Verlaufsmittels - ein handelsübliches Copolymer von Butylacrylat und 2-Ethylhexylacrylat - in dem entsprechenden Polyester in der Schmelze homogenisiert und nach dem Erstarren zerkleinert.

### Katalysator-Masterbatch

Es werden 5 Gew.-% des Katalysators - DBTL - in dem entsprechenden Polyester in der Schmelze homogenisiert und nach dem Erstarren zerkleinert.

Die Abkürzungen in den folgenden Tabellen bedeuten:

| | | |
|---|---|---|
| SD = | Schichtdicke in µm | |
| ET = | Tiefung nach Erichsen in mm | (DIN 53 156) |
| GS = | Gitterschnittprüfung | (DIN 53 151) |
| GG 60 °≮ = | Messung des Glanzes nach Gardner | (ASTM-D 5233) |
| Imp. rev. = | Impact reverse in g·m | |
| HK = | Härte nach König in sec | (DIN 53 157) |

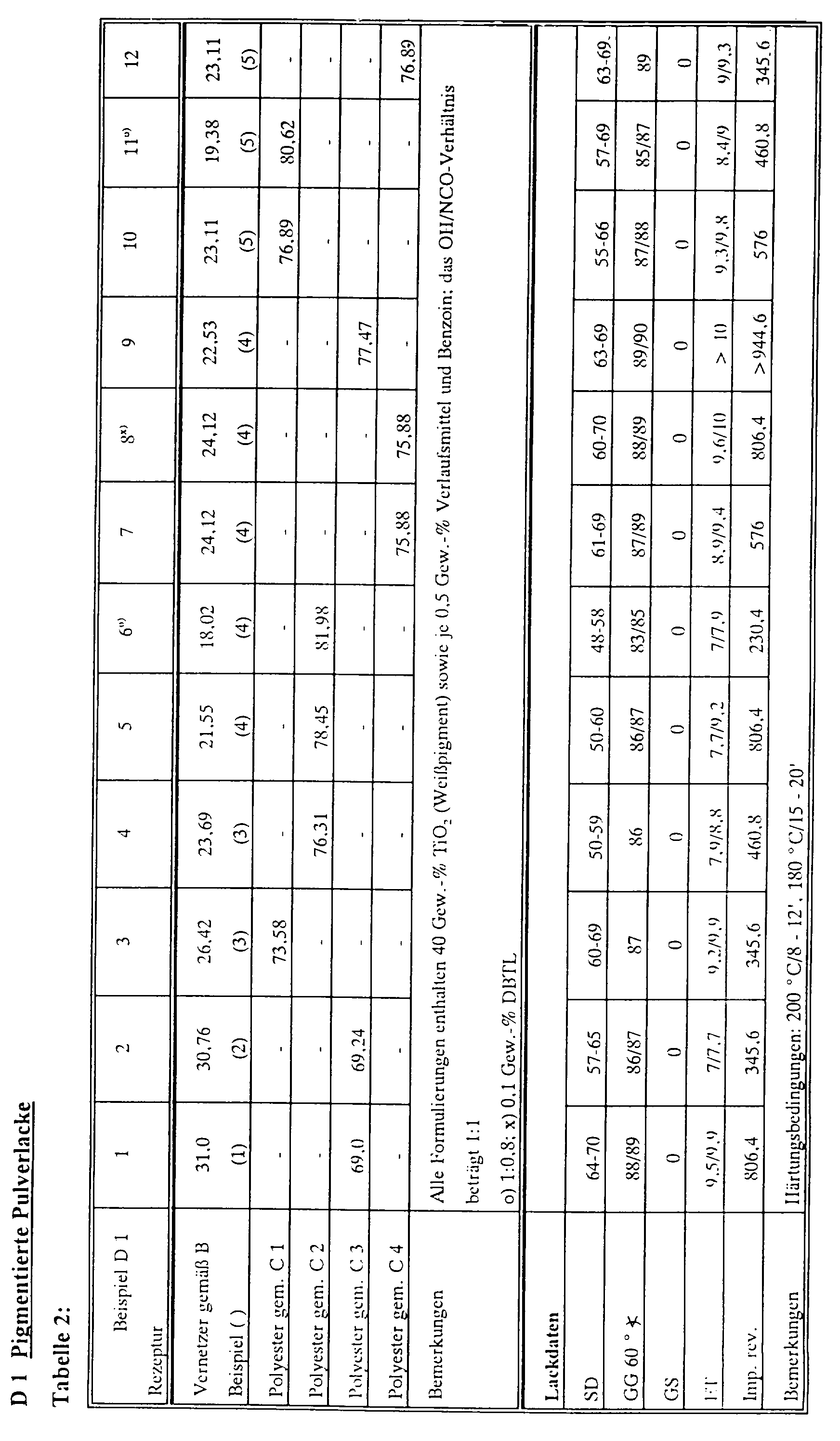

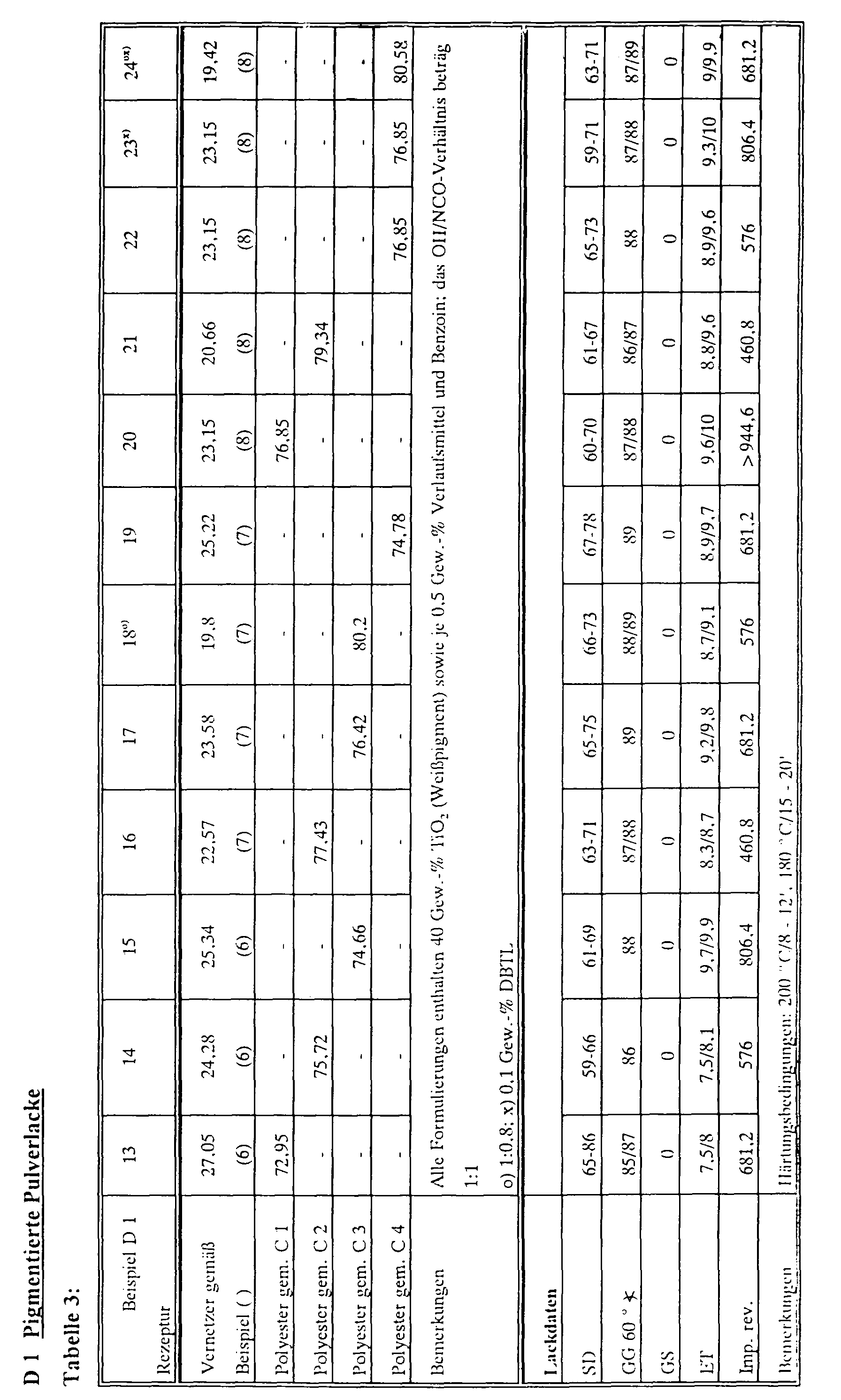

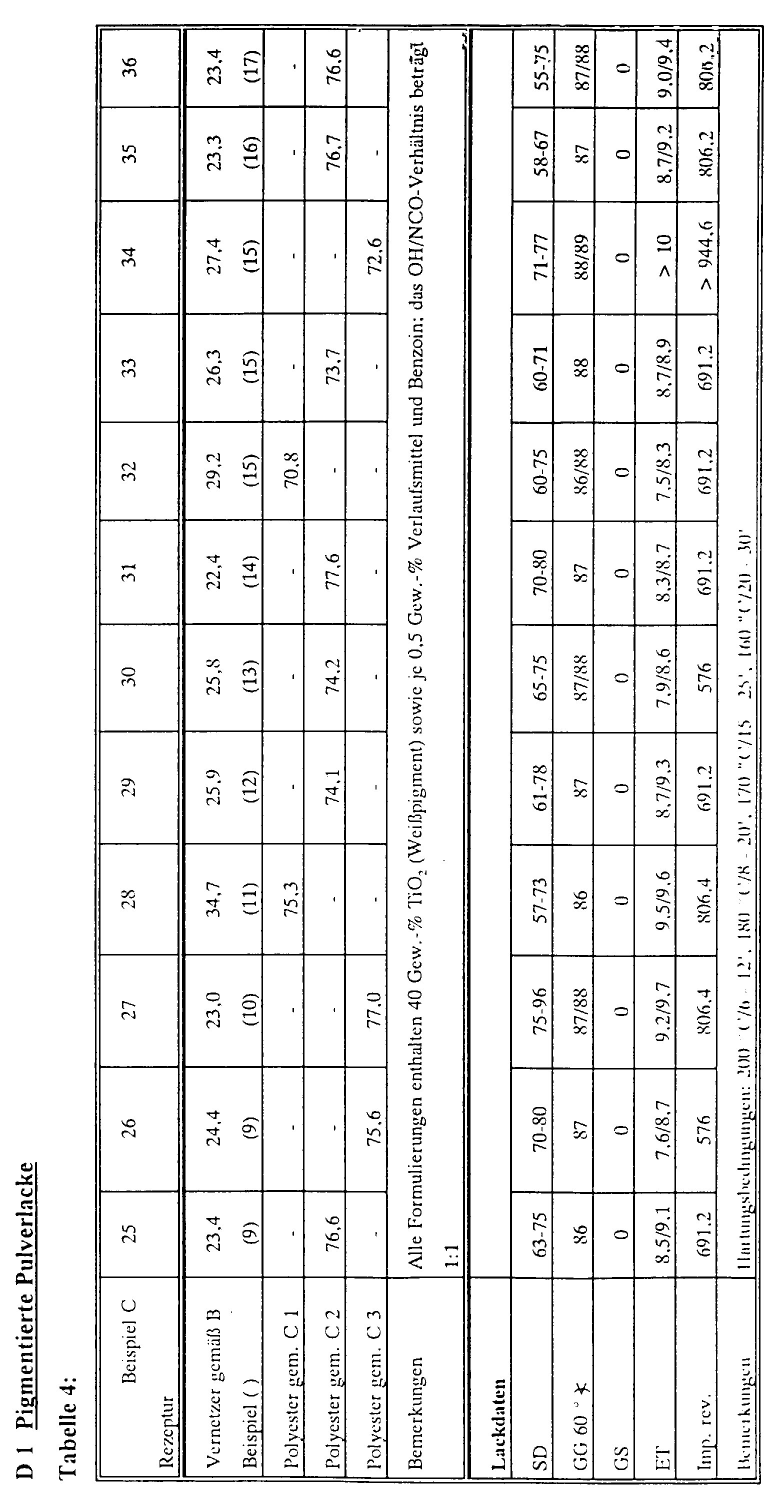

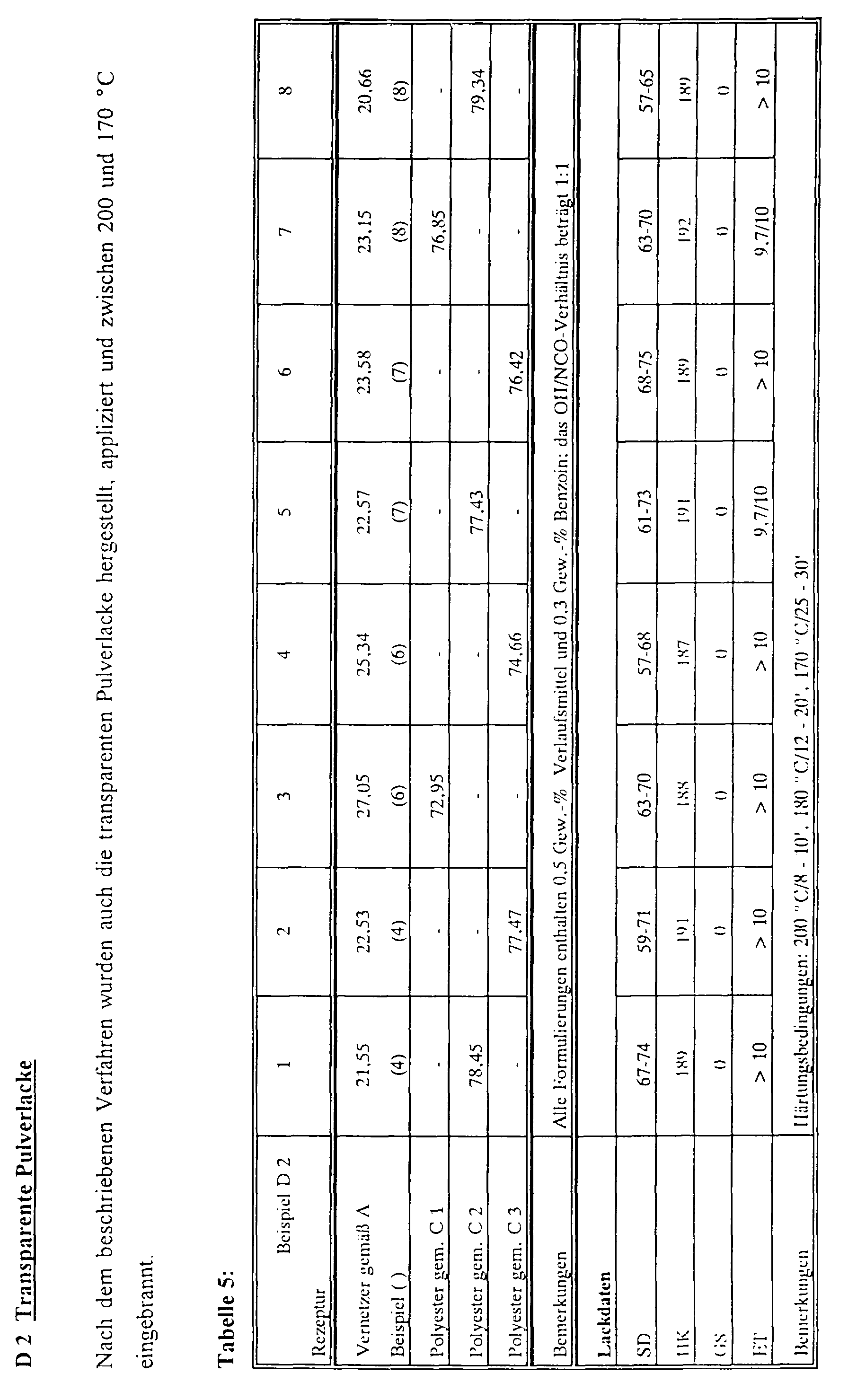

## Patentansprüche

1. Partiell oder vollständig blockierte Polyisocyanate mit einem eingebauten HALS-Stabilisator, enthaltend Blockierungsmittel und Addukte aus Diisocyanaten und Polyolen der allgemeinen Formel: 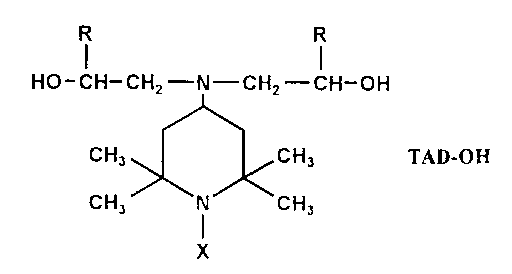 mit R gleich H, Alkyl, Cycloalkyl mit 1 - 20 C-Atomen und 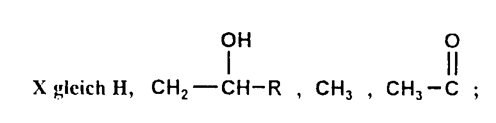 wobei die Addukte pro OH-Äquivalent 2 - 20 NCO-Äquivalente enthalten.

2. Blockierte Polyisocyanate nach Anspruch 1,
dadurch gekennzeichnet,
daß als Polyole die Umsetzungsprodukte aus 4-Amino-2.2.6.6-tetramethylpiperidin und Ethylen- und/oder Propylenoxid der folgenden Formeln eingesetzt werden:

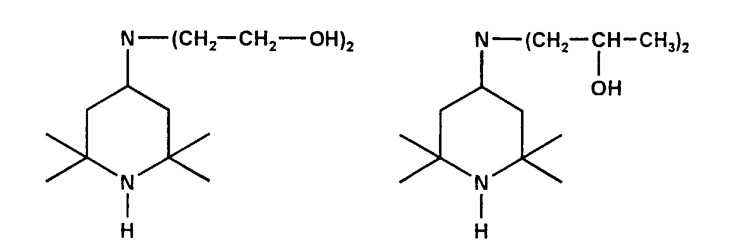

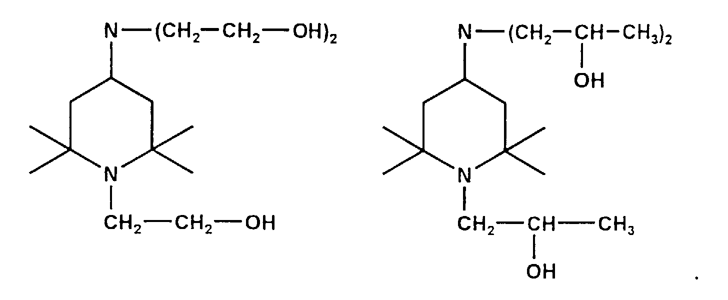

3. Blockierte Polyisocyanate nach den Ansprüchen 1 bis 2,
dadurch gekennzeichnet,
daß das Isophorondiisocyanat (IPDI), Dicylcohexylmethan-4.4'-diisocyanat (HMDI) und/oder Hexamethylendiisocyanat (HDI) eingesetzt werden.

4. Blockierte Polyisocyanate nach den Ansprüchen 1 bis 3,
dadurch gekennzeichnet,
daß reversibele und/oder irreversibele Blockierungsmittel eingesetzt werden.

5. Blockierte Polyisocyanate nach den Ansprüchen 1 bis 4,
dadurch gekennzeichnet,
daß als reversibele Blockierungsmittel ε-Caprolactam, Methylethylketoxim und/oder 1.2.4-Triazol eingesetzt werden.

6. Blockierte Polyisocyanate nach den Ansprüchen 1 bis 5,
dadurch gekennzeichnet,
daß die irreversibelen Blockierungsmittel nur im Gemisch mit reversiblen Blockierungsmitteln eingesetzt werden.

7. Blockierte Polyisocyanate nach den Ansprüchen 1 bis 6,
dadurch gekennzeichnet,
daß als irreversibele Blockierungsmittel Monoalkohole und Monoamine verwendet werden.

8. Blockierte Polyisocyanate nach den Ansprüchen 1 bis 7,
dadurch gekennzeichnet,
daß der freie NCO-Gehalt maximal 5 Gew.-% beträgt.

9. Blockierte Polyisocyanate nach den Ansprüchen 1 bis 8,
dadurch gekennzeichnet,
daß sie eine Glasübergangstemperatur von 25 - 100 °C und eine Erweichungstemperatur von 65 - 140 °C aufweisen.

10. Blockierte Polyisocyanate nach Anspruch 9,
dadurch gekennzeichnet,
daß sie eine Glasübergangstemperatur von 35 - 85 °C und eine Erweichungstemperatur von 70 - 120 °C aufweisen.

11. Verfahren zur Herstellung von partiell oder vollständig blockierten Polyisocyanaten, wobei Blockierungsmittel mit Addukten aus Diisocyanat und TAD-OH umgesetzt werden, und die Addukte pro OH-Äquivalent 2 bis 20 NCO-Äquivalente enthalten.

12. Transparente und pigmentierte PUR-Pulverlacke,
dadurch gekennzeichnet,
daß sie folgende Zusammensetzung aufweisen:
a) 100 Gew.-T. OH-gruppenhaltiges Polymer
b) 10 - 90 Gew.-T. blockiertes Polyisocyanat nach den Ansprüchen 1 bis 10
c) 0 - 160 Gew.-T. Pigmente
d) 0 - 200 Gew.-T. übliche Füllstoffe
e) 0 - 5 Gew.-T. Katalysator
f) 0,5 - 5 Gew.-T. Verlaufsmittel
mit einem OH/NCO-Verhältnis von 1 : 0,5 bis 1,2, vorzugsweise 1 : 0,8 bis 1,1 und insbesondere 1 : 1.

13. PUR-Pulverlacke nach Anspruch 12,
dadurch gekennzeichnet,
daß den PUR-Pulverlacken Katalysatoren zugesetzt werden in einer Konzentration von 0,03 - 0,5 Gew.-T. unter Einbeziehung der bereits enthaltenen Katalysatormenge aus den blockierten Polyisocyanaten.

14. PUR-Pulverlacke nach Anspruch 13,
dadurch gekennzeichnet,
daß den PUR-Pulverlacken organische Zinnverbindungen als Katalysatoren zugesetzt werden.

15. PUR-Pulverlacke nach den Ansprüchen 13 - 14,
dadurch gekennzeichnet,
daß bei den PUR-Pulverlacken 0,05 - 0,15 Gew.-% Katalysatoren eingesetzt werden.

16. PUR-Pulverlacke nach den Ansprüchen 13 - 15,
dadurch gekennzeichnet,
daß als hydroxylgruppenhaltige Polymere Polyester mit einer Funktionalität > 2, einer OH-Zahl von 20 bis 200 mg KOH/g, einer Viskosität < 60 000 mPa·s bei 160 °C und einem Schmelzpunkt ≥ 70 °C und ≤ 120 °C eingesetzt werden.

17. PUR-Pulverlacke nach Anspruch 16,
dadurch gekennzeichnet,
daß als hydroxylgruppenhaltige Polymere Polyester mit einer Funktionalität > 2, einer OH-Zahl von 30 bis 150 mg KOH/g, einer Viskosität < 40 000 mPa·s bei 160 °C und einem Schmelzpunkt von 75 - 100 °C eingesetzt werden.

## Claims

1. A partially or completely blocked polyisocyanate with a built-in HALS stabilizer, comprising a blocking agent and an adduct of a diisocyanate and a polyol of the general formula: 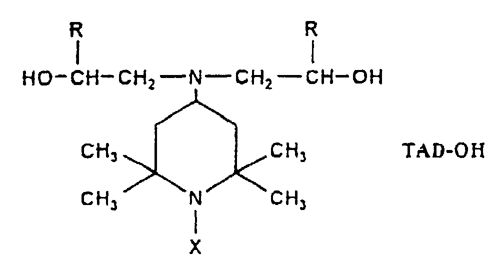 where R is H, alkyl, cycloalkyl of 1-20 carbon atoms and 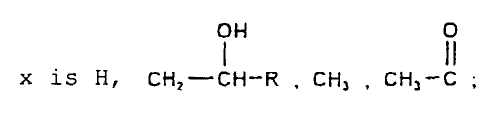 the adduct containing 2-20 NCO equivalents per OH equivalent.

2. A blocked polyisocyanate according to claim 1, characterized in that the polyol used is a reaction product of 4-amino-2,2,6,6-tetramethylpiperidine and ethylene oxide and/or propylene oxide, of one of the following formulae:

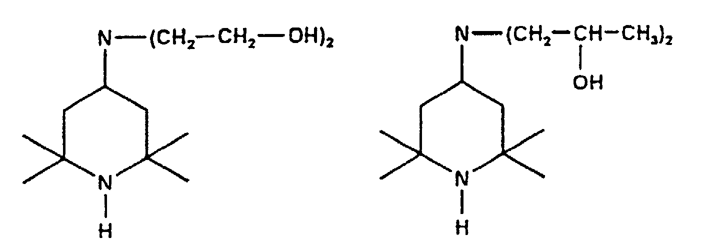

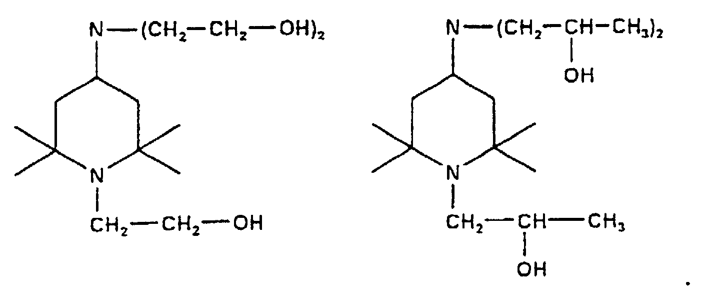

3. A blocked polyisocyanate according to either of claims 1 and 2, characterized in that isophorone diisocyanate (IPDI), dicyclohexylmethane 4,4'-diisocyanate (HMDI) and/or hexamethylene diisocyanate (HDI) are used.

4. A blocked polyisocyanate according to any of claims 1 to 3, characterized in that reversible and/or irreversible blocking agents are used.

5. A blocked polyisocyanate according to any of claims 1 to 4, characterized in that ε-caprolactam, methyl ethyl ketoxime and/or 1,2,4-triazole are used as reversible blocking agents.

6. A blocked polyisocyanate according to any of claims 1 to 5, characterized in that irreversible blocking agents are only used mixed with reversible blocking agents.

7. A blocked polyisocyanate according to any of claims 1 to 6, characterized in that monoalcohols and monoamines are used as irreversible blocking agents.

8. A blocked polyisocyanate according to any of claims 1 to 7, characterized in that the free NCO content is not more than 5% by weight.

9. A blocked polyisocyanate according to any of claims 1 to 8, having a glass transition temperature of 25-100°C and a softening temperature of 65-140°C.

10. A blocked polyisocyanate according to claim 9, having a glass transition temperature of 35-85°C and a softening temperature of 70-120°C.

11. A process for preparing a partially or completely blocked polyisocyanate, which comprises reacting a blocking agent with an adduct of a diisocyanate and TAD-OH, the adduct containing 2 to 20 NCO equivalents per OH equivalent.

12. A transparent and pigmented PUR powder coating, having the following composition:
a) 100 parts by weight of OH-containing polymer
b) 10-90 parts by weight of blocked polyisocyanate according to any of claims 1 to 10
c) 0-160 parts by weight of pigment
d) 0-200 parts by weight of customary fillers
e) 0-5 parts by weight of catalyst
f) 0.5-5 parts by weight of flow agent
with an OH/NCO ratio of 1:0.5 to 1.2, preferably 1:0.8 to 1.1, especially 1:1.

13. A PUR powder coating according to claim 12, containing catalyst in a concentration of 0.03-0.5 part by weight, including the quantity of catalyst already present from blocked polyisocyanate.

14. A PUR powder coating according to claim 13, containing organic tin compounds as catalysts.

15. A PUR powder coating according to either of claims 13 and 14, containing 0.05-0.15% by weight of catalysts.

16. A PUR powder coating according to any of claims 13-15, characterized in that polyesters having a functionality > 2, an OH number of 20 to 200 mg of KOH/g, a viscosity < 60,000 mPa·s at 160°C and a melting point ≥ 70°C and ≤ 120°C are used as hydroxyl-containing polymers.

17. A PUR powder coating according to claim 16, characterized in that polyesters having a functionality > 2, an OH number of 30 to 150 mg of KOH/g, a viscosity < 40,000 mPa·s at 160°C and a melting point of 75-100°C are used as hydroxyl-containing polymers.

## Revendications

1. Polyisocyanates partiellement ou complètement bloqués par un agent stabilisant HALS encastré contenant un agent de blocage et des produits d'addition à base de diisocyanates et de polyols de formule générale : 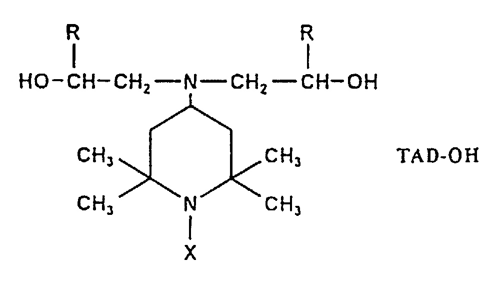 avec R égal à H, alkyle, cycloalkyle ayant de 1 à 20 atomes de carbone et 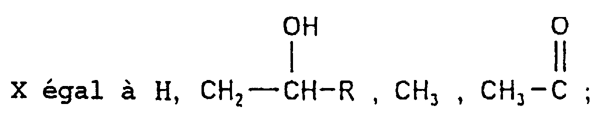 dans lequel les produits d'addition renferment par équivalent OH, de 2 à 20 équivalents en NCO.

2. Polyisocyanates bloqués selon la revendication 1,
caractérisés en ce que
comme polyols, on met en oeuvre les produits de réaction à base de 4-amino-2,2,6,6-tétraméthylpipéridine et d'oxyde d'éthylène et/ou de propylène, de formule suivante :

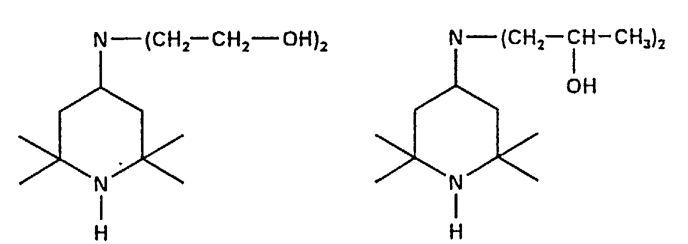

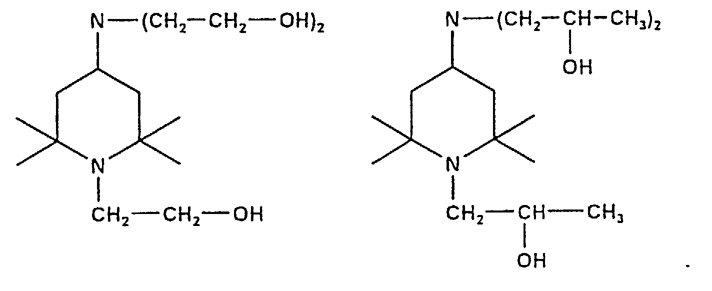

3. Polyisocyanates bloqués selon les revendications 1 et 2,
caractérisés en ce qu'
on met en oeuvre l'isophorone diisocyanate (IPDI), le dicyclohexylméthane-4,4'-diisocyanate (HMDI) et/ou l'hexaméthylènediisocyanate (HDI).

4. Polyisocyanates bloqués selon les revendications 1 à 3,
caractérisés en ce qu'
on met en oeuvre des agents de blocage réversibles et/ou irréversibles.

5. Polytisocyanates bloqués selon les revendications 1 à 4,
caractérisés en ce que
comme agent de blocage réversible, on met en oeuvre l'ε-caprolactame, le méthyléthylcétoxime, et/ou le 1,2,4-triazole.

6. Polyisocyanates bloqués selon les revendications 1 à 5,
caractérisés en ce qu'
on met en oeuvre les agents de blocage irréversibles seulement en mélange avec des agents de blocage réversibles.

7. Polyisocyanates bloqués selon les revendications 1 à 6,
caractérisés en ce qu'
on utilise comme agents de blocage irréversibles des monoalcools et des monoamines.

8. Polyisocyanates bloqués selon les revendications 1 à 7,
caractérisés en ce que
la teneur en NCO libre s'élève au maximum à 5 % en poids.

9. Polyisocyanates bloqués selon les revendications 1 à 8,
caractérisés en ce qu'
ils possèdent une température de transition vitreuse, de 25 à 100°C et une température de ramollissement de 65-140°C.

10. Polyisocyanates bloqués selon la revendication 9,
caractérisés en ce qu'
ils possèdent une température de transition vitreuse de 35-85°C et une température de ramollissement de 70-120°C.

11. Procédé de préparation de polyisocyanates partiellement ou complètement bloqués,
dans lequel les agents de blocage sont mis à réagir avec des produits d'addition à base de diisocyanate et de TAD-OH, et les produits d'addition renferment par équivalent d'OH, de 2 à 20 équivalents en NCO.

12. Laques en poudre de PUR transparentes et pigmentées,
caractérisées en ce qu'
elles possèdent la composition suivante :
a) 100 parties en poids de polymère contenant des groupes OH,
b) de 10 à 90 parties en poids de polyisocyanate bloqué selon les revendications 1 à 10,
c) de 0 à 160 parties en poids de pigment,
d) de 0 à 200 parties en poids de substances de remplissage usuelles,
e) de 0 à 5 parties en poids de catalyseur,
f) de 0,5 à 5 parties en poids d'agent d'écoulement avec un rapport OH/NCO de 1 :0,5 à 1,2, de préférence de 1 :0,8 à 1,1 et en particulier 1 : 1.

13. Laques en poudre de PUR selon la revendication 12,
caractérisées en ce qu'
aux laques en poudre de PUR, on ajoute des catalyseurs à une concentration de 0,03-0,5 partie en poids tout en tenant compte de la quantité de catalyseur déjà contenue à partir des polyisocyanates bloqués.

14. Laques en poudre de PUR selon la revendication 13,
caractérisées en ce qu'
on ajoute comme catalyseurs aux laques en poudre, des composés organiques de l'étain.

15. Laques en poudre de PUR selon les revendications 13 ou 14,
caractérisées en ce qu'
on met en oeuvre dans les laques en poudre de PUR, de 0,05 à 0,15 % en poids de catalyseurs.

16. Laques en poudre de PUR selon les revendications 13 à 15,
caractérisées en ce que
comme polymères contenant les groupes hydroxyle, on met en oeuvre des polyesters ayant une fonctionnalité > 2, un indice d'OH de 20 à 200 mg KOH/g, une viscosité < 60.000 mPa.s à 160°C et un point de fusion ≥ 70°C et ≤ 120°C.

17. Laques en poudre de PUR selon la revendication 16,
caractérisées en ce que
comme polymères contenant des groupes hydroxyle, on met en oeuvre des polyesters ayant une fonctionnalité > 2, un indice d'OH de 30 à 150 mg KOH/g, une viscosité < 40.000 mPa.s à 160°C, et un point de fusion de 75 à 100°C.
